Europäisches Patentamt
European Patent Office
Office européen des brevets

(11) Publication number: 0 003 880 A1

# EUROPEAN PATENT APPLICATION

(21) Application number: 79300200.7

(22) Date of filing: 09.02.79

(51) Int. Cl.[2]: C 07 C 111/00
C 07 C 121/00, C 07 C 147/00
A 01 N 5/00

(30) Priority: 21.02.78 US 879336

(43) Date of publication of application: 05.09.79 Bulletin 79/18

(84) Designated contracting states: BE CH FR IT NL SE GB

(71) Applicant: AMERICAN CYANAMID COMPANY
Berdan Avenue
Wayne New Jersey 06904(US)

(72) Inventor: Cross, Barrington
27 Toth Lane
Rocky Hill New Jersey(US)

(72) Inventor: Bhalla, Prithvi Raj
Wynbrook West J-15
Hightstown New Jersey(US)

(72) Inventor: O'Neal, Thomas Denny
365 Cold Soil Road
Princeton New Jersey(US)

(74) Representative: Allam, Peter Clerk et al,
TREGEAR, THIEMANN & BLEACH Enterprise House
Isambard Brunel Road
Portsmouth, Hants PO1 2AN(GB)

(54) **Substituted phenylnitramines with plant growth regulating properties.**

(57) The invention relates to substituted phenylnitramins with plant growth regulating properties, and to the use of these compounds for the control of relative growth of graminaceous crops, leguminous crops and cotton, especially for reducing the relative stem growth and increasing stem stiffness. The plant growth regulating phenylnitramines have the formula:

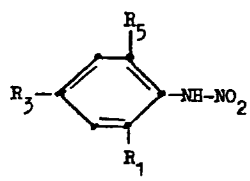

wherein $R_1$ is halogen, $C_1$-$C_4$ alkyl, CN, $CO_2CH_3$, $SO_2CH_3$, $SO_2F$, $SO_2CF_3$, $C_1$-$C_3$ haloalkyl, $C_1$-$C_3$ haloalkoxy or $NO_2$; $R_3$ is halogen, methyl or methoxy; $R_5$ is halogen, $CF_3$, methoxy or $C_1$-$C_4$ alkyl; with the proviso that not more than two of said R groups may represent fluorine, or an ammonium salt thereof.

EP 0 003 880 A1

Croydon Printing Company Ltd.

Title: Substituted Phenylnitramines with Plant Growth Regulating Properties

The herbicidal properties of phenylnitramines and their use for the control of weeds is described in United States Patent No. 3,844,762, issued October 29, 1974 (to B. Cross *et al.*), in which novel methods for the control of undesired plant species are disclosed by employing certain substituted phenylnitramines. The geotropic response of roots of rape and ryegrass, and the selective reduction of root growth when seeds of said plants are grown in the presence of phenylnitramines is described by R. L. Jones *et al.*, *Journal of Science and Food Agriculture* 5, 38 (1954). The effect of 2,4,6-tribromophenylnitramine and 2-chloro-9-fluorenol-9-carboxylic acid applied preemergence to groundsel and chickweed is described by W. Templeman, *Proceedings of the British Weed Control Conference* 1, 3 (1954). It states that, although weed control is achieved at 11.2 and 16.8 kg/ha, these compounds possess very little selectivity and most crops, which have been examined, have also proved to be susceptible.

None of the above references even slightly suggest the novel plant growth regulating activity of substituted phenylnitramines (also known as N-nitroanilines) and salts thereof, nor indeed could such activity be predicted therefrom.

The present invention in one aspect relates to methods for the control of the relative stem growth of graminaceous crops, leguminous crops and cotton, comprising applying to the foliage stems, roots or seeds of said plants, or to the soil in which said plants are grown, a plant growth regulating amount of a phenylnitramine or N-nitroaniline having the structure:

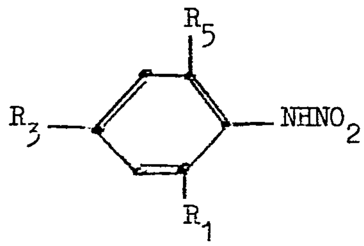

(I)

wherein $R_1$ is halogen, $C_1$-$C_4$ alkyl, CN, $CO_2CH_3$, $SO_2CH_3$, $SO_2F$, $SO_2CF_3$, $C_1$-$C_3$ haloalkyl, $C_1$-$C_3$ haloalkoxy or $NO_2$; $R_3$ is halogen, methyl or methoxy; $R_5$ is halogen, $CF_3$, methoxy or $C_1$-$C_4$ alkyl; with the proviso that not more than two of said R groups may represent fluorine, and the salts thereof.

Preferred haloalkyl substituents are $CF_3$, $CCl_3$, $CHF_2$, $CClF_2$, $CHF_2$, $CH_2Cl$ and $CHCl_2$.

Preferred haloalkoxy substituents are $OCF_3$ and $OCHF_2$.

A preferred group of compounds are those wherein $R_1$ is $CF_3$, I, Cl or Br; $R_3$ is Br, Cl or I; and $R_5$ is Cl, Br or I, provided that not more than two of said R groups may be iodine, and the salts thereof.

The above compounds are effective plant growth regulating agents, and are especially useful for reducing the relative stem growth and increasing the stiffness (hereinafter also referred to as dwarfing and stiffening) of said stems, of cotton and of graminaceous crops, such as barley, oats, rye, wheat, sorghum, corn and rice. Usually about 0.025 to 1.5 kg/ha, and preferably 0.05 to 1.25 kg/ha of active compound, is sufficient to achieve this dwarfing and stiffening effect.

For broadleaf crops, such as bean producing legumes, about 0.01 to 0.5 kg/ha of active compound is sufficient to achieve this dwarfing and stiffening effect.

Dwarfing and/or stiffening of the stems of cotton, legumes and graminaceous crops is most advantageous to the farmer since lodging of these crops usually results in reduced yields of the affected crops.

Lodging refers to the deflection of the plant from the vertical, varying in degree from only a slight deflection to complete deflection (*i.e.* plants prone) caused by, in most cases, the action of wind and/or rain on the plants. This deflection is such that

when the causal agent (wind, rain) is no longer present the deflection is neither immediately nor completely overcome. Moreover, where extensive or severe lodging has occurred, the crop may be difficult to harvest and the yield markedly reduced.

Inasmuch as the compounds of the present invention have only limited solubility in water, they are generally formulated for foliar application as wettable powders, flowable dispersions or emulsion concentrates, which are usually dispersed in water or in other, inexpensive, liquid diluents for application to the foliage of said plants as a liquid spray. However, when the compounds are to be used where soil treatments are involved, they may also be formulated as granular products.

A typical wettable powder can be prepared by grinding together approximately 46% by weight of a finely divided carrier such as attapulgite, 50% by weight of the phenylnitramine compound, 3% by weight of the sodium salt of condensed naphthalene sulfonic acids and 1% by weight of sodium N-methyl-N-oleoyltaurate.

A typical flowable dispersion can be prepared by admixing about 42% by weight of the phenylnitramine with about 3% by weight of the sodium salt of condensed naphthalene sulfonic acids, 2% by weight of finely divided bentonite and 53% by weight of water.

Emulsion concentrates may be prepared by dissolving 15% to 70% by weight of the compound in 85% to 30% of a solvent such as benzene, toluene, xylene, kerosene, 2-methoxy ethanol, propylene glycol, diethylene glycol, diethylene glycol monomethyl ether, formamide, methylformamide, and the like, and mixtures thereof. Advantageously, surfactants such as polyoxyethylated vegetable oil or an alkyl phenoxy polyoxyethylene ethanol are also incorporated in amounts of 1% to 5% by weight of said concentrate.

A granular product can be prepared by dissolving the compound in a suitable solvent, such as acetone, and spraying the resultant solution on a granular carrier such as sand, silica, kaolin, corn cob grits, and the like.

Most of the compounds of formula (I) herein are novel, and form an important aspect of the present invention. Specifically, the novel compounds of formula (I) are those wherein $R_1$, $R_3$ and $R_5$ are as

defined above but with the proviso that not more than two of said R groups may represent the same substituent; and the ammonium salts thereof.

In accordance with this invention, the phenylnitramines can be prepared from the corresponding substituted anilines by a variety of conventional procedures. For illustrative purposes, one such procedure is hereinbelow graphically illustrated and described as follows:

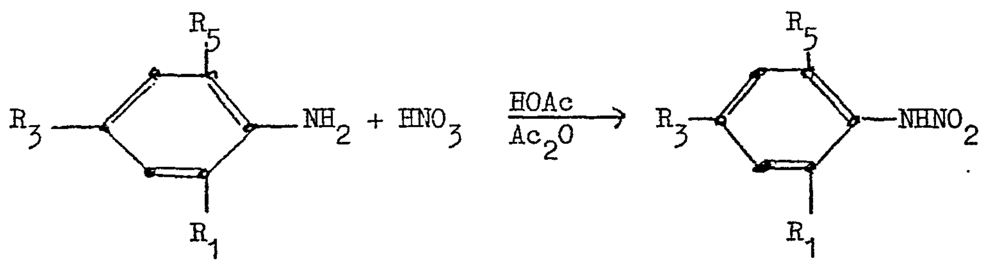


(II) (I)

wherein $R_1$, $R_3$ and $R_5$ are as hereinabove defined. The above synthesis is conveniently carried out in a solvent, such as acetic acid, preferably in the presence of a dehydrating agent, such as acetic anhydride. The product may be precipitated from the reaction mixture by the addition of ice water. Purification may be effected by conventional procedures such as recrystallization, chromatography, and the like.

The phenylnitramines, wherein $R_1$ and/or $R_5$ are haloalkyl or hydroxyalkyl and $R_3$ is halogen, can be prepared by a two-step synthesis involving Step 1, the reaction of the appropriate haloalkyl aniline or haloalkoxyaniline with halogen (e.g. chlorine or bromine) in the presence of an acid acceptor such as sodium acetate, potassium acetate, or the like, in the presence of an inert organic solvent (e.g. tert-butanol, $CCl_4$, ethylene dichloride, chlorobenzene, or the like). The reaction is generally conducted at a temperature in the range of from 25°C to 75°C, and preferably at a temperature of about 45°C to 55°C. The reaction yields the corresponding 2,4,6-trisubstituted aniline, which may then be converted, in Step 2, to the corresponding 2,4,6-trisubstituted phenylnitramine by reaction with nitric acid in the presence of a solvent, such as acetic acid, and a dehydrating agent, such as

acetic anhydride. Steps 1 and 2 can be graphically illustrated as follows:

Step 1

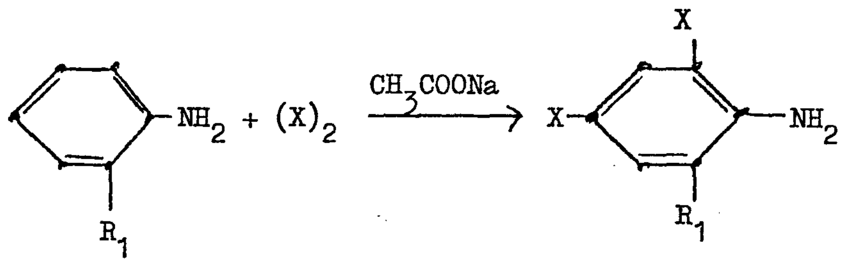


or

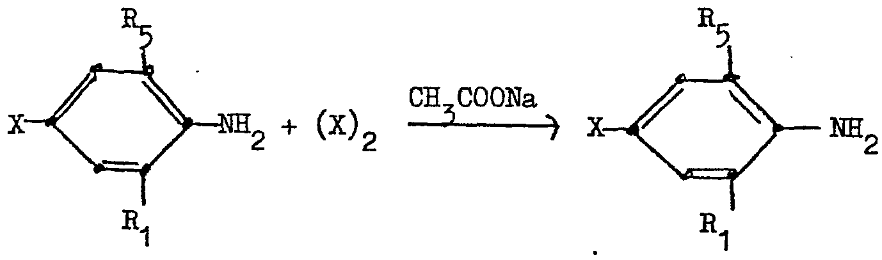


wherein $R_1$ and $R_5$ are haloalkyl or haloalkoxy, and X is chlorine or bromine.

Step 2

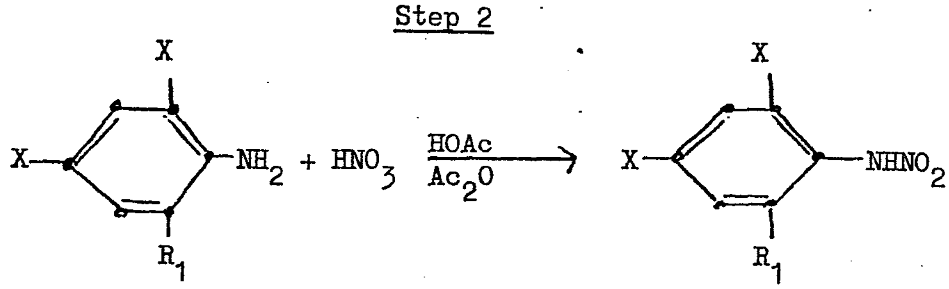


or

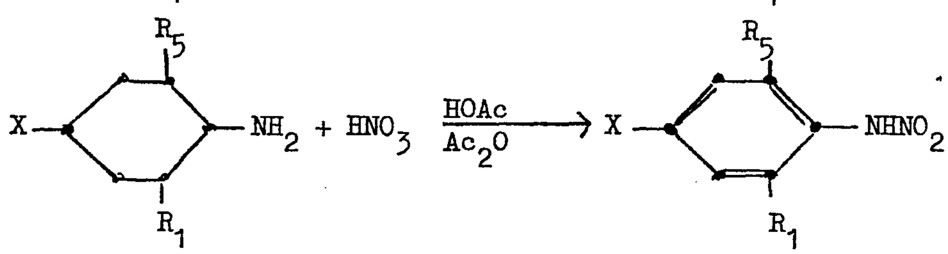


wherein $R_1$, $R_5$ and X are as described above.

The ammonium salts of the phenylnitramines can be conveniently prepared by dissolving the appropriately substituted compound in warm to hot water and adding one molar equivalent (or slight excess) of ammonium hydroxide to the solution. On cooling the mixture, the ammonium salt usually precipitates out. The above reaction may be graphically illustrated as follows:

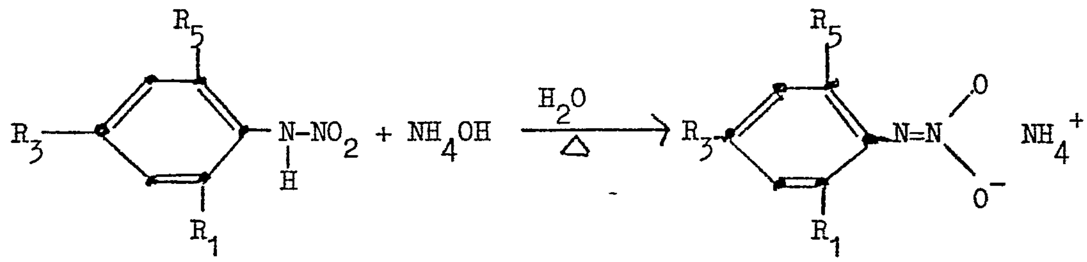

(I) (Ia)

The alkali metal salts may be prepared by the same procedure.

Organic ammonium salts of formula (I) compounds may be prepared by related procedures.

Of particular interest are organic ammonium salts of 2--trifluoromethyl-4,6-dihalophenylnitramines and 2,4,6-trihalophenylnitramines. To prepare these, and organic ammonium salts of other phenylnitramines, the appropriate phenylnitramine is dissolved in benzene or toluene, and a one molar equivalent (or slight excess) of the appropriate amine is added. Formation of salt is rapid at room temperature (or with gentle warming) and upon cooling, the salts usually precipitate from the solution. Those ammonium salts, which have appreciable solubility in the above solvents, may be precipitated from the solution by the addition of a lower alcohol such as methanol or ethanol.

Although benzene or toluene are preferred, other solvents, such as ether, cyclohexanone, acetonitrile, dimethylformamide, alcohols, hydrocarbons, ethyl acetate, acetone, carbon tetrachloride and mixtures thereof, may be utilized in this salt-forming reaction, if desired.

The above organic ammonium salts may be graphically illustrated and described as follows:

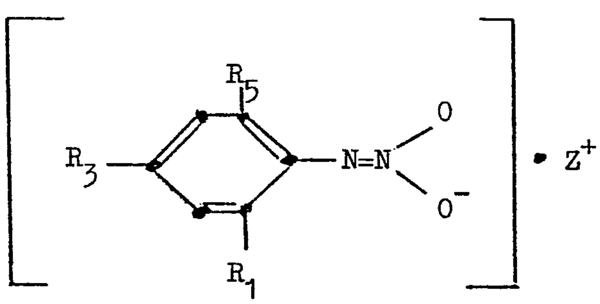

(Ib)

wherein $R_1$, $R_3$ and $R_5$ are as defined above; $Z^+$ is selected from

$H_3N^+R'$, $H_2N^+R'R''$, $H\text{-}N^+R'R''R'''$ and $N^+R'R''R'''R''''$; and R groups: R' to R'''' each are selected from $C_1$-$C_{12}$ alkyl, $C_2$-$C_4$ hydroxyalkyl, aryl, preferably phenyl and substituted phenyl, wherein the substituents are selected from halogen and $C_1$-$C_6$ alkyl; and aralkyl $C_1$-$C_3$, preferably benzyl and substituted benzyl, wherein the substituents are selected from halogen and $C_1$-$C_6$ alkyl, and when two of the R' and R'''' groups are taken together with the nitrogen to which they are attached they may form a heterocyclic ring.

A preferred group of ammonium salts represented by formula (1b) are those wherein $R_1$ is $CF_3$, and $R_3$ and $R_5$ are bromine; $Z^+$ is selected from $H_2N^+(CH_3)_2$, $H_2N^+(C_4H_9\text{-}\underline{n})_2$, $H_3N^+CH_2CH_2OH$, $H_2N^+(CH_2CH_2OH)_2$, $H_3N^+C_8H_{11}\text{-}\underline{n}$, $H_3N^+\text{-}C_{12}H_{25}\text{-}\underline{n}$,

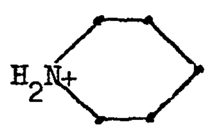 , 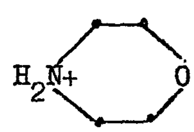 and 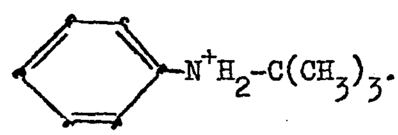.

Among the compounds of the invention which are particularly effective for inhibiting lodging of cotton, legumes and graminaceous crops are:

2,4,6-tribromo-N-nitroaniline;
4-chloro-2,6-diiodo-N-nitroaniline;
2,4-dibromo-6-iodo-N-nitroaniline;
2,6-dibromo-4-chloro-N-nitroaniline;
2,6-dichloro-4-iodo-N-nitroaniline;
2,4-dibromo-α,α,α-trifluoro-N-nitro-o-toluidine;
2-bromo-4-chloro-6-iodo-N-nitroaniline;
4-bromo-2-chloro-6-iodo-N-nitroaniline;
2-chloro-4,6-diodo-N-nitroaniline;
2,4-dibromo-6-chloro-N-nitroaniline;
2,6-dibromo-4-iodo-N-nitroaniline;
4-bromo-2,6-diiodo-N-nitroaniline;
4-bromo-N-nitro-2,6-xylidine;
4-bromo-2,6-dichloro-N-nitroaniline;
2-bromo-4,6-diiodo-N-nitroaniline;
2,6-dibromo-N-nitro-p-anisidine;
2,4,6-trichloro-N-nitroaniline;

2,4-dibromo-6- α,α -difluoro-N-nitro-o-toluidine;
2,4-dibromo-6- α,α,α -trichloro-N-nitro-o-toluidine;
2,4-dibromo-6- α,α -dichloro-N-nitro-o-toluidine;
2,4-dichloro-6- α,α,α -trifluoro-N-nitro-o-toluidine;
4-bromo-2,6- α,α,α -ditrifluoro-N-nitro-2,6-xylidine;
2,4-dibromo-6- α,α,α -trifluoro-N-nitro-o-anisidine;
2,4-dibromo-6-α-fluoro-N-nitro-o-toluidine;
2,4-dibromo-6- α-chloro-N-nitro-o-toluidine;
2-nitramino-3,5-dibromobenzoic acid, methyl ester;
2-nitramino-3,5-dibromobenzonitrile;
2,4-dibromo-6-methylsulfonyl-N-nitroaniline;
2,4-dibromo-6- α,α -difluoro-N-nitro-o-anisidine;
2-nitramino-4,6-dibromobenzenesulfonyl fluoride;
2,6-dibromo-2-nitro-N-nitroaniline;
2,6-dibromo-4-fluoro-N-nitroaniline;
2-bromo-2,6-difluoro-N-nitroaniline;
2,4-dibromo-6-isopropyl-N-nitroaniline;
2-bromo-4,6-dichloro-N-nitroaniline;
2-chloro-4,6-diiodo-N-nitroaniline, diisopropylamine salt;
and 3,5-dibromo-2-nitraminobenzenesulforyl fluoride.

This invention is further illustrated by examples set forth below.

EXAMPLE 1

General Procedure for the Preparation of Phenylnitramines

To a cooled (10°C to 20°C) solution containing an appropriately substituted aniline (0.10 mole) in glacial acetic acid (100 to 500 ml) is added dropwise, with cooling and stirring during 15 to 30 minutes, 90% nitric acid (15 to 16 ml; 0.28-0.30 mole). In many reactions, the nitrate salt precipitates out. After 15 minutes to one hour, acetic anhydride (15 ml) is added dropwise with stirring and the temperature allowed to attain 18°C to 25°C. The reaction mixture darkens and becomes homogeneous, at which point the mixture is poured into ice water (1:1, 1 litre). The resulting precipitate is filtered, washed with water and dissolved in aqueous 10% sodium carbonate.

The acidic filtrate is extracted with chloroform

(2 x 200 ml), and the chloroform layer is washed with water (2 x 200 ml). The chloroform layer is extracted with 10% aqueous sodium carbonate, and both of the above carbonate solutions are combined, washed with chloroform, cooled to 10°C and acidified with ice-cold 2N hydrochloric acid to precipitate the phenylnitramine product. The nitramine is filtered, washed with cold water, dried _in vacuo_ and recrystallized from the appropriate solvent.

If desired, the above chloroform solution may be evaporated to dryness to afford a mixture of the desired product, the unreacted aniline and side products. The impurities may be separated by conventional procedures, such as selective crystallization, extraction, chromatography, and the like.

Various substituted phenylnitramines prepared by the above general procedure are set forth in the Table below.

TABLE I

| $R_{(n)}$ | Melting Point $^oC$ | Crystallization Solvent | % Yield |
|---|---|---|---|
| 2,4,6-tri-Br | 138-139 dec. | cyclohexane | 38 |
| 2,4,6-tri-Cl | 138 dec. | cyclohexane | 27 |
| 2-Cl; 6-Br; 4-I | 131-133 dec. | hexane | 77 |
| 2,6-di-Cl; 4-Br | 139-140 dec. | hexane | 64 |
| 2-Br; 4,6-di-F | 96-98 dec. | hexane | 67 |
| 2,6-di-I; 4-Br | 124-127 dec. | hexane | 50 |
| 2,6-di-$CH_3$; 4-Br | 129-131 dec. | hexane | 20 |
| 2,6-di-I; 4-Cl | 128-131 dec. | hexane | 43 |
| 2,6-di-Br; 4-Cl | 132-134 dec. | hexane | 67 |
| 2,6-di-Br; 4-F | 105-107 dec. | hexane | 63 |
| 2,6-di-Br; 4-I | 131-133 dec. | hexane | 27 |
| 2,4-di-Br; 6-I | 121-123 dec. | hexane | 44 |
| 2,4-di-Br; 6-_i_-$CH(CH_3)_2$ | 93-94 dec. | hexane | 20 |
| 2,4-di-Br; 6-$CH_3$ | 106-108 dec. | hexane | 76 |
| 2,6-di-Cl; 4-I | 128-130 dec. | hexane | 33 |
| 2,4-di-Cl; 6-I | 119-122 dec. | hexane | 45 |
| 2,6-di-I; 4-F | 124-125 | hexane | 55 |
| 2,4,6-tri-I | 140-142 | hexane | 76 |
| 2,4-di-Br; 6-Cl | 137 | hexane | 30 |
| 2,4-di-Cl; 6-Br | 136 | hexane | 73 |
| 2,4-di-I: 6-Cl | 118.5-120 | hexane | 28 |
| 2,4-di-I; 6-Br | 120.5-121 | hexane | 21 |
| 2,6-di-Cl; 6-$CH_3$ | 122-123 | hexane | 32 |
| 2,4-di-$CH_3$; 6-Br | 104.5-106 | hexane | 25 |
| 2-I; 4-Cl-6-Br | 121-123 | hexane | 50 |

TABLE I (Continued)

| $R_{(n)}$ | Melting Point °C | Crystallization Solvent | % Yield |
|---|---|---|---|
| 2-I; 4-Br-6-Cl | 131-133 | hexane | 50 |
| 2,4-di-Br; 6-$CF_3$ | 126-128 | hexane | 40 |
| 2-Br; 4-Cl; 6-$CF_3$ | | | |
| 4-Br; 2-Cl; 6-$CF_3$ | | | |
| 4-Cl; 2-I; 6-$CF_3$ | | | |
| 4-Br; 2-I; 6-$CF_3$ | | | |

EXAMPLE 2

Preparation of 2-Bromo-4-chloro-6-iodo-N-nitroaniline

To an ice-cooled solution of 2-bromo-4-chloro-6-iodoaniline (18.05 mmole, 6.0g) in 200 ml of glacial acetic acid is added dropwise, 90% nitric acid (173.52 mmole, 8.1 ml). The precipitated salt is observed, while continued stirring with cooling for 0.5 hour. Acetic anhydride (8.1 ml) is added dropwise with cooling. The solution darkens and becomes homogeneous. The cooled solution is poured into 600 ml of ice water, the precipitate is filtered, washed with water, then dissolved in 10% sodium bicarbonate (300 ml). The filtrate is extracted with methylene chloride (3 x 100 ml), and the combined methylene chloride extracts are washed with water (3 x 100 ml). The methylene chloride layer is extracted with 10% sodium bicarbonate (3 x 100 ml), and both of the bicarbonate solutions are combined, then washed with methylene chloride until the bicarbonate layer is colourless. The bicarbonate solution is cooled in an ice bath, then acidified with 15% HCl. The precipitated product is filtered, washed with water, then dried in vacuo. Recrystallization from hot hexane yields 4.22 g of product melting at 121-123°C (dec.).

EXAMPLE 3

Preparation of 4-Bromo-2,6-dimethyl-N-nitroaniline

To a cooled (-60°C) solution of 4-bromo-2,6-dimethylaniline (0.037 mole, 7.4 g) dissolved in anhydrous ether (100 ml) under

nitrogen with stirring is added dropwise, phenyl lithium (21.5 ml, 0.040 mole). The solution is stirred for 1.5 hours at -60°C. The solution is allowed to warm to -10°C, then it is cooled to -60°C. The nitrogen flow is stopped while methyl nitrate (0.044 mole, 3.4 g) in anhydrous ether (25 ml) is added dropwise. The solution is stirred for 0.5 hour at -60°C, then it is allowed to warm to room temperature. The solution is stirred for 1.6 hours; the ether layer is evaporated. The solid is dissolved in water (250 ml), then is extracted with ether (2 x 100 ml). The cold water layer is acidified with 5% HCl. The precipitated product is filtered, washed with water, and dried _in vacuo_. Recrystallization from hot hexane yields 2.5 g of the desired product melting at 129-131°C.

EXAMPLE 4

Preparation of 2-Trifluoromethyl-4,6-dibromoaniline

To a solution of 2-trifluoromethylaniline (62.06 mmole, 10.0 g) and sodium acetate (155.17 mmole, 12.73 g) in 335 ml _tert_-butanol is added dropwise, a solution of bromine (124.13 mmole, 6.8 ml) in 65 ml _tert_-butanol. The reaction mixture is warmed to 50°C for 0.5 hour during which the solution becomes colourless. The solution is poured into water, then is extracted with ether (3 x 100 ml). The combined ether extracts are washed with water (2 x 200 ml), 5% sodium bicarbonate (2 x 200 ml), saturated sodium chloride (2 x 200 ml), and water (3 x 200 ml). The ether layer is dried over $MgSO_4$, filtered, then evaporated at reduced pressure to give an oil, which upon treatment with petroleum ether (30-60°C) yields a solid. Recrystallization from 95% ethanol and water yields 11.3 g of product melting at 42-44°C.

EXAMPLE 5

Preparation of 2-Trifluoromethyl-4,6-dibromo-N-nitroaniline

To an ice-cooled solution of 2-trifluoromethyl-4,6-dibromoaniline (18.81 mmole, 6.0 g) in 200 ml glacial acetic acid is added dropwise, 90% nitric acid (181.15 mmole, 8.4 ml). Continued stirring with cooling for 0.5 hour. Acetic anhydride (8.4 ml) is added dropwise with cooling. After the addition is complete, the mixture is allowed to warm to 25°C during which the solution darkens and becomes homogeneous. The solution is poured into 600 ml of ice

water, the precipitated product is filtered, washed with water, then dissolved in 10% sodium bicarbonate (300 ml). The filtrate is extracted with methylene chloride (3 x 100 ml), and the combined methylene chloride extracts are washed with water (3 x 100 ml). The methylene chloride layer is extracted with 10% sodium bicarbonate (3 x 100 ml), and both of the bicarbonate solutions are combined, then washed with methylene chloride (5 x 100 ml). The bicarbonate solution is cooled in an ice bath, then acidified with 15% HCl. The precipitated product is filtered, washed with water, then dried <u>in vacuo</u>. Recrystallization from hot hexane yields 3.92 g of product melting at 126-128°C (dec.).

EXAMPLE 6

General Procedure for the Preparation of Organic Ammonium Salts of Substituted Phenylnitramines

To a solution of the appropriately substituted phenylnitramine (0.10 mole) in a solvent selected from benzene, toluene, xylene, acetonitrile, and the like, or mixtures thereof, a solution of the appropriate amine (0.10 to 0.2 mole) in the above solvents is added. The reaction mixture is warmed slightly, if needed, the precipitated salt is filtered, washed with the appropriate solvent and purified by standard laboratory procedures, if desired.

By the above procedure, the following ammonium salts are made:

2,4-dibromo-6-methoxy-N-nitroaniline diisopropylamine salt, melting point 139-145°C;

2,4-dibromo-6-isopropyl-N-nitroaniline diisopropylamine salt, melting point 144-151°C (dec.);

2,6-dibromo-4-methoxy-N-nitroaniline diisopropylamine salt, melting point 156-162°C (dec.);

2,4-diiodo-6-chloro-N-nitroaniline diisopropylamine salt, melting point 183.5-184°C;

2,4,6-tribromo-N-nitroaniline ethylamine salt, melting point 128-130°C;

2,4,6-tribromo-N-nitroaniline diisopropylamine salt, melting point 164-171°C;

2,4,6-tribromo-N-nitroaniline methylamine salt, melting

point 157-164°C;

2,4,6-tribromo-N-nitroaniline amine salt, melting point 164°C;

2,4,6-tribromo-N-nitroaniline n-octylamine salt, melting point 78-81°C;

2,4,6-tribromo-N-nitroaniline tetra-butylamine salt, melting point 102-106°C.

EXAMPLES 7-18

Evaluation of the Dwarfing and Stiffening Effect of the Phenylnitramines of the Present Invention on Barley

In the following tests, the appropriate phenylnitramines are dissolved or dispersed in acetone-water (1:1) mixtures at the final concentration corresponding to the kg/ha rates indicated in the tables below. The solutions also contain 0.1% to 0.25% v/v colloidal BIOFILM (a trade mark of Colloidal Products Corp.) which is a mixture of alkyl aryl polyethoxyethanol, free and combined fatty acids, glycol ethers, dialkylbenzene carboxylate and 2-propanol.

The plant species used in these tests are barley (*Hordeum vulgare* var. Villa and var. Larker), wheat (*Triticum aestivum* var. Era and var. Garnet) and rice (*Oryza sativa* var. Saturn).

The solution or dispersion of the compound under test is sprayed at a rate of 747 l/ha with a moving nozzle over a stationary track. The spray nozzle moves at a constant speed over the test species.

In the preemergence test, containers are filled to within 2.5 cm of the top with greenhouse potting soil, seeds are added, covered with additional potting soil, and then sprayed. The pots were watered immediately before treatment and benched at random in the greenhouse. Normal watering and fertilizing practices are followed (pesticides are applied to the plants as needed). Minimum day and night temperatures of 18.3°C are maintained during cooler periods of the year. Normal daily fluctuations occur during the summer season.

Postemergence tests are conducted in like manner the preemergence tests. However, the plant species employed in these tests are well established seedlings 10 to 20 cm in height. Plants

are watered prior to treatment and are sprayed to provide the kg/ha rates indicated in the tables below.

Data Recording

Periodic observations are made after treatment and morphological changes are noted. At the time of observation, the height of plants is determined. If the plants are maintained to maturity and harvested, second internode lengths and second internode diameters are also determined. From these measurements, as compared to the untreated controls, the dwarfing effect of the instant compounds on barley can be determined.

Measurement of Culm (Stem) Stiffness

Six to eight plants, forming a straight row, are pulled over to an angle of approximately $45^{o}$ off vertical with a spring balance attached through a loop of string encircling said line of plants directly below the top. The force required to pull the plants over is read off the spring balance and is given in grams.

At each level of active compound, the treatments are replicated, as are the controls. In the following tables, the phenylnitramines tested at the indicated kg/ha rates are listed together with the averaged data of the corresponding replicates.

TABLE II

Evaluation of the dwarfing effect of phenylnitramines on barley (var. Villa) applied as a preemergence spray. The barley seeds are planted in 12.5 cm pots in greenhouse soil. Five replicates are used for each treatment and for the untreated controls. Height measurements are taken 15 days post-treatment. At each kg/ha rate, the data of the corresponding replicates are averaged.

| Compound | Rate: kg/ha | Height in cm | Height Reduction in % |
|---|---|---|---|
| Control | - | 19.4 | - |
| 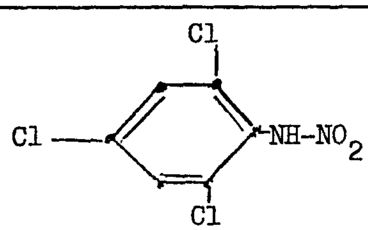 | 0.56<br>1.12<br>2.24 | 19.4<br>17.0<br>21.2 | 12.4 |

TABLE III

Evaluation of the dwarfing effect of phenylnitramines on barley (var. Villa) applied as a postemergence spray when the plants are 15 cm tall. Five replicates are used for each treatment and for the untreated controls. Measurements are taken 3 weeks post-treatment. At each kg/ha rate, the data of the corresponding replicates are averaged.

| Compound | Rate: kg/ha | Height in cm | Height Reduction in % |
|---|---|---|---|
| Control | - | 31.4 | - |
| 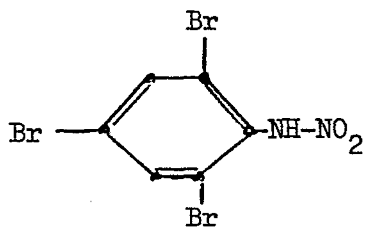 | 0.28<br>0.56<br>1.12 | 24.8<br>21.2<br>20.0 | 21.1<br>32.5<br>36.3 |

TABLE IV

Evaluation of the dwarfing effect of phenylnitramines on barley (var. Larker) applied as a postemergence spray when the plants are one week old. Five replicates are used for each treatment and eleven replicates are used for untreated controls. Measurements are taken 16 days post-treatment. At each kg/ha rate, the data of the corresponding replicates are averaged.

| Compound | Rate: kg/ha | Height in cm | Height Reduction in % |
|---|---|---|---|
| Control | - | 30.9 | - |
| 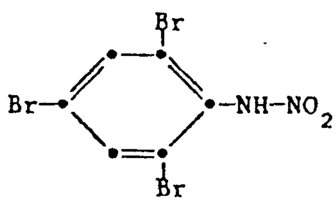 | 0.56<br>0.84<br>1.12<br>1.68 | 26.8<br>25.0<br>23.4<br>24.4 | 13.2<br>19.0<br>24.2<br>21.0 |
| 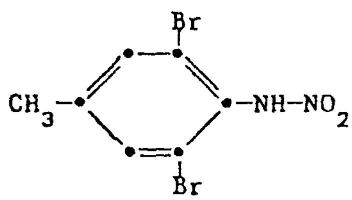 | 0.56<br>0.84<br>1.12<br>1.68 | 28.8<br>28.2<br>29.6<br>30.5 | 6.8<br>8.7<br>4.2<br>1.2 |
| 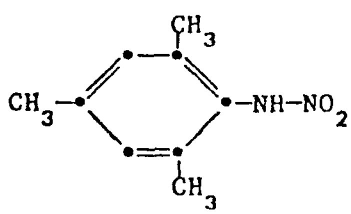 | 0.56<br>0.84<br>1.12<br>1.68 | 28.4<br>21.2<br>28.2<br>31.0 | 8.1<br>31.3<br>8.7<br>- |

TABLE V

Evaluation of the dwarfing effect of phenylnitramines on barley (var. Conquest) applied as a postemergence spray when the plants are 10 days old. Four replicates are used for each treatment. The plants are maintained under greenhouse conditions and are exposed to high intensity metal halide lights for a photo-period of 16 hours daily. Measurements are taken 3 weeks post-treatment. At each kg/ha rate the data of the corresponding replicates are averaged.

| Compound | Rate: kg/ha | Height in cm | Height Reduction in % |
|---|---|---|---|
| Control | - | 48.5 | - |
| 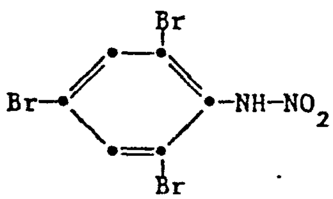 | 0.25<br>0.50<br>0.75 | 41.8<br>37.8<br>35.2 | 13.8<br>22.1<br>27.4 |

TABLE VI

Evaluation of the dwarfing and stiffening effect of 2,4,6-tribromo-N-nitroaniline on barley (var. Larker) applied as a preemergence spray. The seeds are planted in 17.5 cm pots in greenhouse potting soil. Five replicates are used for each treatment and for untreated controls. Measurements are taken on weeks indicated post-treatment. At each kg/ha rate, the data of the corresponding replicates are averaged. The plants are maintained during the test under greenhouse conditions, and are exposed to high intensity metal halide lights for a photo-period of 19 hours daily.

| Compound | Rate: kg/ha | 7 Weeks | | | | 9 Weeks | | | | 13 Weeks | |
|---|---|---|---|---|---|---|---|---|---|---|---|
| | | Height in cm | Height Reduction in % | Stiffness in g | % Change in Stiffness | Height in cm | Height Reduction in % | Stiffness in g | % Change in Stiffness | Height in cm | Height Reduction in % |
| Control | - | 64.8 | - | 75 | - | 65.4 | - | 135 | - | 60.4 | - |
| 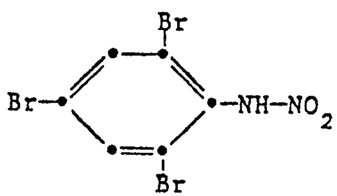 | 0.28<br>0.56<br>1.12 | 55.2<br>51.8<br>54.6 | 14.8<br>20.7<br>15.7 | 125<br>185<br>160 | 66<br>146<br>113 | 56.2<br>51.4<br>54.2 | 14.0<br>21.4<br>17.1 | 280<br>285<br>365 | 107<br>111<br>170 | 53.8<br>51.2<br>55.2 | 10.9<br>15.2<br>8.6 |

TABLES VIIA, VIIB, VIIC and VIID

Evaluation of the dwarfing and stiffening effect of 2,4,6-tribromo-N-nitroaniline on barley (var. Larker) applied as a postemergence spray at various stages of development of said plants, as indicated in the following tables. The seeds are planted in 17.5 cm pots in greenhouse potting soil. Five replicates are used for each treatment and for the untreated controls at each stage. The plants are maintained under greenhouse conditions and are exposed to high intensity metal halide lamps for a photoperiod of 19 hours daily. Measurements are taken on days indicated post-treatment. At each kg/ha rate, the data of the corresponding replicates are averaged.

TABLE VIIA

Stage 1. The plants are treated 12 days after planting when they are 10-11 cm tall and had 3 leaves.

| Compound | Rate: kg/ha | 10 Days | | 23 Days | | 35 Days | | 43 Days | | 49 Days | |
|---|---|---|---|---|---|---|---|---|---|---|---|
| | | Height in cm | Height Reduction in % | Height in cm | Height Reduction in % | Height in cm | Height Reduction in % | Height in cm | Height Reduction in % | Height in cm | Height Reduction in % |
| Control | - | 26.4 | - | 45.0 | - | 51.7 | - | 57.0 | - | 48.3 | - |
| 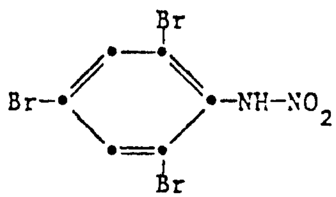 | 0.28<br>0.56<br>1.12 | 16.2<br>19.6<br>20.0 | 38.6<br>25.7<br>24.2 | 43.2<br>40.5<br>* | 4.0<br>10.0 | 55.7<br>55.7 | -<br>- | 60.0<br>53.8 | -<br>5.6 | 52.3<br>54.5 | -<br>- |

*Phytotoxic

TABLE VIIB

Stage 2. The plants are treated 25 days after planting, when they are 30 cm tall, have 3-4 leaves and 2 internodes.

| Compound | Rate: kg/ha | 10 Days | | 40 Days | | 50 Days | |
|---|---|---|---|---|---|---|---|
| | | Height in cm | Height Reduction in % | Height in cm | Height Reduction in % | Height in cm | Height Reduction in % |
| Control | - | 54.6 | - | 61.0 | - | 57.8 | - |
| 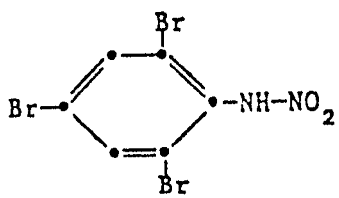 | 0.28 | 54.2 | 0.7 | 54.8 | 10.1 | 54.6 | 5.5 |
| | 0.56 | 50.8 | 6.9 | 59.2 | 2.9 | 53.4 | 7.6 |
| | 1.12 | 49.2 | 9.8 | 58.0 | 4.9 | 52.6 | 8.9 |

TABLE VIIC

Stage 3. The plants are treated 35 days after planting, when they are 50 cm tall, have 4-5 leaves and 4 internodes.

| Compound | Rate: kg/ha | 12 Days Height in cm | 12 Days Height Reduction in % | 30 Days Height in cm | 30 Days Height Reduction in % | 40 Days Height in cm | 40 Days Height Reduction in % |
|---|---|---|---|---|---|---|---|
| Control | - | 59.3 | - | 62.0 | - | 56.3 | - |
| 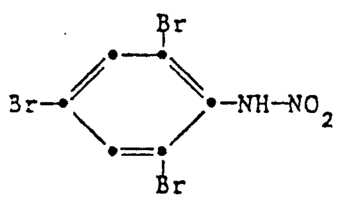 | 0.28<br>0.56<br>1.12 | 56.4<br>58.2<br>57.0 | 4.8<br>1.8<br>3.8 | 58.8<br>60.6<br>58.2 | 5.1<br>2.2<br>6.1 | 52.0<br>56.4<br>56.0 | 8.3 |

TABLE VIID

The stem stiffening effect of 2,4,6-tribromo-N-nitroaniline applied as a postemergence spray on barley (var. Larker) at three stages of development of said plants is summarized as the average of 5 replicates at each kg/ha rate of application.

| Compound | Rate: kg/ha | Stage 1 | | | | Stage 2 | | | | Stage 3 | | | |
|---|---|---|---|---|---|---|---|---|---|---|---|---|---|
| | | 35 Days | | 50 Days | | 22 Days | | 40 Days | | 12 Days | | 30 Days | |
| | | ST | % ST | ST | % ST | ST | % ST | ST | % ST | ST | % ST | ST | % ST |
| Control | - | 281.2 | - | 218 | - | 202 | - | 180 | - | 205 | - | 233 | - |
| 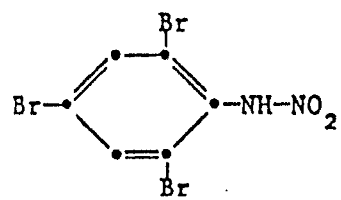 | 0.28 | 303 | 7.8 | 235 | 7.8 | 262 | 27 | 231 | 28 | 187 | - | 181 | - |
| | 0.56 | 262 | - | 215 | - | 250 | 21.9 | 265 | 47 | 237 | 15.6 | 268 | 15 |
| | 1.12 | - | - | 269 | 23.4 | 292 | 42.4 | 241 | 33.8 | 233 | 13.6 | 222 | - |

ST = Stiffening (force in grams).

% ST = Percent increase in stem stiffness relative for checks.

TABLE VIII

Evaluation of the dwarfing effect of phenylnitramines on wheat (var. Era and var. Garnet) and on rice (var. Saturn) applied as preemergence spray. Six replicates are used for each treatment and for untreated controls. Measurements are taken 19 days post-treatment. At each kg/ha rate, the data of the corresponding replicates are averaged.

| Compound | Rate: kg/ha | Wheat var. Era Height in cm | Wheat var. Era Height Reduction in % | Wheat var. Garnet Height in cm | Wheat var. Garnet Height Reduction in % | Rice var. Saturn Height in cm | Rice var. Saturn Height Reduction in % | Remarks |
|---|---|---|---|---|---|---|---|---|
| Control | - | 32.0 | - | 34.25 | - | 30.4 | - | |
| 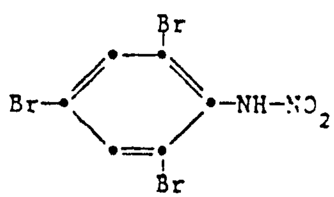 | 0.56 | 30.5 | 4.7 | 30.8 | 10.1 | 25.5 | 16.1 | Very slight tip burn on rice. |
| | 1.12 | 29.5 | 7.8 | 30.5 | 10.9 | 23.6 | 23.4 | Slight tip burn on rice. |
| | 1.68 | 29.2 | 8.8 | 28.4 | 17.1 | 16.3 | 46.4 | Approximately 25% stand reduction and moderate tip burn on rice. |
| | 2.24 | 28.0 | 12.5 | 27.4 | 20.0 | 16.0 | 47.4 | Approximately 50% stand reduction and severe tip burn on rice. |

## TABLE IX

Evaluation of the dwarfing effect of phenylnitramines on wheat and rice applied as preemergence spray to soil. Six replicates are used for each treatment and for untreated controls. Measurements are taken 19 days post-treatment. At each kg/ha rate, the data of the corresponding replicates are averaged.

| Compound | Rate: kg/ha | Wheat var. Era Height in cm | Wheat var. Era Height Reduction in % | Wheat var. Garnet Height in cm | Wheat var. Garnet Height Reduction in % | Rice* var. Saturn Height in cm | Rice* var. Saturn Height Reduction in % |
|---|---|---|---|---|---|---|---|
| Control | - | 32.0 | - | 34.25 | - | 30.4 | - |
| 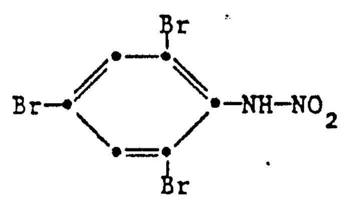 | 0.56 | 30.5 | 4.7 | 30.8 | 10.1 | 25.5 | 16.1 |
| | 1.12 | 29.5 | 7.8 | 30.5 | 10.9 | 23.6 | 23.4 |
| | 1.68 | 29.2 | 8.8 | 28.4 | 17.1 | 16.3 | 46.4 |
| | 2.24 | 28.0 | 12.5 | 27.4 | 20.0 | 16.0 | 47.4 |

*Rice at 1.68 and 2.24 kg/ha rate stand reduction (~25% and ~50%) and moderate to severe tip burn was noted.

EXAMPLE 19

Evaluation of the dwarfing effect of phenylnitramines on spring barley (var. Conquest), applied as a postemergence spray, is achieved in the following tests. Individual plants growing in 10 cm sq. pots in high porosity soil are sprayed with test solutions or suspensions, prepared as 50/50 water/acetone mixtures containing 0.25% of a surfactant, when the plants are at the three-leaf to very early tillering stage. The sprayer is an overhead sprayer designed to deliver 86 gallons/acre of solution or suspension and is located about 26 cm above the plants. Plants are measuredon the day of treatment and again 18 days after treatment when the dwarfing effect of the test compound is determined. During the test, all plants are fertilized with liquid fertilizer four times a day, except weekends, when they are only watered. The fertilizer is a complete one containing 200 ppm N, 166 ppm K, 30 ppm P, plus all other essential nutrients. Data obtained 18 days after treatment are reported below.

TABLE X

| Compound | % Dwarfing (Mean of 5 Replications) 0.1 kg/hectare | 0.2 kg/hectare | 0.5 kg/hectare |
|---|---|---|---|
| 2,4,6-tribromo-N-nitroaniline | 13.8 | 21.3 | 37.7 |
| 2,4-dibromo-6-iodo-N-nitroaniline | - | 20.7 | 32.4 |
| 2,6-dichloro-4-iodo-N-nitroaniline | 11.8 | 15.7 | 17.4 |
| 2,6-dibromo-4-chloro-N-nitroaniline | 7.4 | 15.7 | 33.2 |
| 4-chloro-2-bromo-6-iodo-N-nitroaniline | 15.3 | 25.7 | 39.4 |
| 2-chloro-4-bromo-6-iodo-N-nitroaniline | 7.9 | 15 | 26.9 |
| 2,4-dibromo-α,α,α-trifluoro-N-nitro-o-toluidine | 26.8 | 36.2 | 50 |
| 2-chloro-4,6-dibromo-N-nitroaniline | - | 10.8 | 18.9 |
| 2-chloro-4,6-diiodo-N-nitroaniline | - | 21.5 | 21.2 |
| 2-bromo-4,6-diiodo-N-nitroaniline | - | 13 | 6.3 |
| 2,6-dibromo-3,4-dichloro-N-nitroaniline | - | - | 8.6 |

EXAMPLE 20

Evaluation of the dwarfing effect of phenylnitramines on corn (var. DeKalb XL78) and soybeans (var. Adelphia) applied as a postemergence spray, is achieved in the following tests. Individual plants growing in 10 cm pots, in greenhouse soil, are sprayed at the two-leaf stage for corn, and the second trifoliate stage for soybeans. The corn is 13 cm in height and the soybeans 14 cm in height when the treatments are made. Test solutions or suspensions are made in 50/50 acetone/water mixtures containing 0.25% v/v of a surfactant (*e.g.* BIOFILM (a trade mark of Colloidal Products Corp.)). Twenty-three days after treatment, the plants are examined and final measurements made. These measurements are compared with the initial measurements made at the time of treatment to determine the percent dwarfing obtained. Results are reported in the Table below, and are mean average of 10 replications per treatment.

CORN

| Compound | % Dwarfing of Corn |
|---|---|
| | 0.5 kg/hectare |
| 2,4,6-tribromo-N-nitroaniline | 11.0 |

SOYBEANS

| Compound | % Dwarfing of Soybeans | | |
|---|---|---|---|
| | 0.1 kg/hectare | 0.2 kg/hectare | 0.5 kg/hectare |
| 2,4,6-tribromo-N-nitroaniline | 24 | 36 | 76 |

CLAIMS

1. A method for the control of relative growth of graminaceous crops, leguminous crops and cotton by applying to the foliage, stems, roots, seeds of said plants or to soil in which said crops are grown, an effective growth regulating amount of a growth regulating compound, characterized in that the growth regulating compound has the formula:

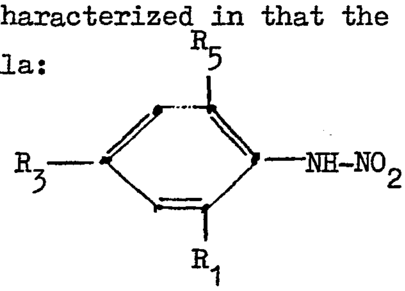

wherein $R_1$ is halogen, $C_1$-$C_4$ alkyl, CN, $CO_2CH_3$, $SO_2CH_3$, $SO_2F$, $SO_2CF_3$, $C_1$-$C_3$ haloalkyl, $C_1$-$C_3$ haloalkoxy or $NO_2$; $R_3$ is halogen, methyl or methoxy; $R_5$ is halogen, $CF_3$, methoxy or $C_1$-$C_4$ alkyl; with the proviso that not more than two of said R groups may represent fluorine, or an ammonium salt thereof.

2. A method according to Claim 1, characterized in that the growth regulating compound is an ammonium salt wherein the cation has the formula:

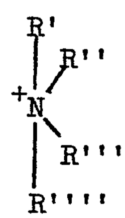

and R' to R'''' are each selected from hydrogen, $C_1$-$C_{12}$ alkyl, $C_2$-$C_4$ hydroxyalkyl, aryl, and aralkyl $C_1$-$C_3$, or two of the R' to R'''' groups are taken together with the nitrogen to which they are attached and form a heterocyclic ring.

3. A method according to Claim 1 or Claim 2, characterized in that $R_1$ is $CF_3$, I, Cl or Br; $R_3$ is Br, Cl or I; and $R_5$ is Cl, Br or I, provided that not more than two of said groups may be iodine.

4. A method according to any preceding claim, characterized in that the growth regulating compound is 2,4,6-tribromo-N-nitroaniline, 4-chloro-2,6-diiodo-N-nitroaniline, 2,4-dibromo-6-iodo-N-nitroaniline, 2,6-dibromo-4-chloro-N-nitroaniline,

2,6-dichloro-4-iodo-N-nitroaniline, 2,4-dibromo- α,α,α-trifluoro-N--nitro-o-toluidine, 2-bromo-4-chloro-6-iodo-N-nitroaniline, 4-bromo-2-chloro-6-iodo-N-nitroaniline, 2-chloro-4,6-diiodo-N-nitroaniline, 2,4-dibromo-6-chloro-N-nitroaniline, 2,6-dibromo-4-iodo-N--nitroaniline, 4-bromo-2,6-diiodo-N-nitroaniline, 4-bromo-N-nitro-2,6-xylidine, 4-bromo-2,6-dichloro-N-nitroaniline, 2-bromo-4,6-diiodo--N-nitroaniline, 2,6-dibromo-N-nitro-p-anisidine or 2,4,6-trichloro--N-nitroaniline.

5. A method according to any preceding claim, characterized in that there is applied to the foliage, stems, roots or seeds of graminaceous crops, leguminous crops or cotton, or to soil in which said crops are grown, an amount of said growth regulating compound effective to reduce the relative stem growth and increase the stem stiffness of said crops.

6. A method according to Claim 5, characterized in that said amount of said growth regulating compound is from 0.01 to 1.5 kg/hectare.

7. A compound having the formula:

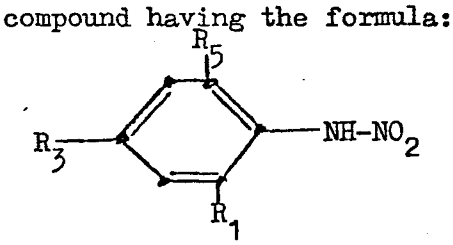

wherein $R_1$ is halogen, $C_1$-$C_3$ alkyl, CN, $CO_2CH_3$, $SO_2CH_3$, $SO_2F$, $SO_2CF_3$, $C_1$-$C_3$ haloalkyl, $C_1$-$C_3$ haloalkoxy or $NO_2$; $R_3$ is halogen, methyl or methoxy; $R_5$ is halogen, $CF_3$, methoxy or $C_1$-$C_3$ alkyl; with the proviso that not more than two of said R groups may represent the same substituent, or an ammonium salt thereof.

8. A compound according to Claim 6, characterized in that $R_1$ is $C_1$-$C_3$ haloalkyl.

9. A compound according to Claim 8, characterized in that said compound is 2,4-dibromo-6-iodo-N-nitroaniline, 2,6-dichloro-4-N-nitroaniline, 2,4-dibromo-α,α,α-trifluoro-N-nitro-o--toluidine, 2,4-dibromo-6-α,α-difluoro-N-nitro-o-toluidine, 2,4--dichloro-6-α,α,α-difluoro-N-nitro-o-toluidine, 2-nitramino-3,5--dibromobenzoic acid, methyl ester, 2-bromo-4-chloro-6-α,α,α-trifluoro-N-nitro-o-toluidine, 4-bromo-2-chloro-6-α,α,α-trifluoro-

-N-nitro-o-toluidine, 4-chloro-2-iodo-6-α, α, α-trifluoro-N-nitro-o-toluidine, 4-bromo-2-iodo-6-α, α, α-trifluoro-N-nitro-o-toluidine, 2-nitramino-3,5-dibromobenzonitrile, 2,4-dibromo-6-methylsulfonyl-N-nitroaniline or 2,4-dibromo-6-α, α,-difluoro-N-nitro-o-anisidine.

10. A composition for inhibiting lodging of cotton, leguminous crops and graminaceous crops comprising a growth regulating compound and a diluent therefor, characterized in that said growth regulating compound has the formula:

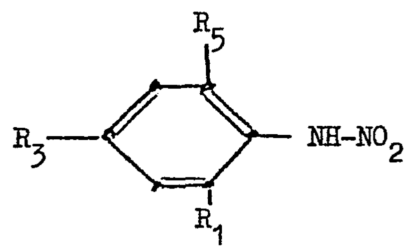

wherein $R_1$, $R_3$ and $R_5$ are as defined in Claim 1, or an ammonium salt thereof, and said diluent is selected from finely divided inert solid carriers, water, inert organic solvents and mixtures thereof.

11. A process for the preparation of a compound as defined in Claim 7, characterized by reacting a substituted aniline of the following formula:

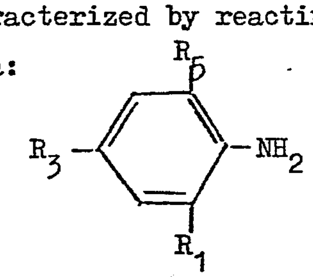

wherein $R_1$, $R_3$ and $R_5$ are as defined in Claim 7 with nitric acid in an inert solvent and in the presence of a dehydrating agent, and if desired forming an ammonium salt of the resulting aniline.

12. A process according to Claim 11, characterized in that said inert solvent is acetic acid and said dehydrating agent is acetic anhydride.

13. A process for the preparation of a compound as defined in Claim 7, characterized by reacting a haloalkyl aniline or a haloalkoxy in an inert solvent and aniline with a halogen in the presence of an acid acceptor at a temperature range from 25°C to 75°C to form the corresponding trisubstituted aniline which is reacted with nitric acid to form the corresponding phenylnitramine and if

desired forming an ammonium salt of the product.

14. A process according to Claim 13, characterized in that said acid acceptor is sodium or potassium acetate and said inert solvent is a lower alkanol.

49/51, BEDFORD ROW, LONDON WC1V 6RL

0003880

European Patent Office

# EUROPEAN SEARCH REPORT

Application number
EP 79 30 0200

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | GB - A - 1 329 012 (MONSANTO CHEMICALS LTD.)<br>* Page 1, lines 32-36; claims 1, 16; example 1 *<br>---- | 1,3,5-7,10-14 | C 07 C 111/00<br>121/00<br>147/00<br>A 01 N 5/00 |
| | | | TECHNICAL FIELDS SEARCHED (Int.Cl.²) |
| | | | C 07 C 111/00<br>121/00<br>147/00<br>A 01 N 5/00 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| p | The present search report has been drawn up for all claims | | &: member of the same patent family, corresponding document |

| Place of search | Date of completion of the search | Examiner |
|---|---|---|
| The Hague | 18-04-1979 | BRINKMANN |

EPO Form 1503.1 06.78